# EUROPEAN PATENT SPECIFICATION

(11) **EP 0 746 657 B1**
(45) Date of publication and mention of the grant of the patent: **22.03.2000**
(21) Application number: 92925112.2
(22) Date of filing: 13.11.1992
(51) Int. Cl.: E04B 1/38, E04C 5/00, E04C 2/38, F16B 13/10

(54) **APPARATUS AND METHOD FOR MOUNTING ITEMS AT AN INACCESSIBLE WALL SURFACE**
GERÄT UND VERFAHREN ZUM BEFESTIGEN VON DINGEN AUF UNERREICHBAREN WANDOBERFLÄCHEN
APPAREIL ET PROCEDE SERVANT A MONTER DES ARTICLES SUR UNE SURFACE DE MUR INACCESSIBLE

(30) Priority: 13.11.1991 US 791265
(43) Date of publication of application: 11.12.1996
(73) Proprietor: Berenter, Allen, Palm Beach Gardens, Florida 33410 (US)
(72) Inventor: Berenter, Allen, Palm Beach Gardens, Florida 33410 (US)
(74) Representative: Rackham, Stephen Neil
(86) International application number: US9209613
(87) International publication number: WO9310316

(56) References cited:
- EP-A- 0 399 165
- DE-A- 2 452 398
- DE-A- 3 115 023
- DE-A- 3 343 085
- DE-C- 67 613
- FR-A- 2 382 558
- GB-A- 2 216 917
- US-A- 2 059 153
- US-A- 2 667 037
- US-A- 2 863 314
- US-A- 3 722 165
- US-A- 4 631 889
- US-A- 4 748 821
- US-A- 4 834 601

## Description

The present invention relates to apparatus for mounting devices on wall surfaces which are difficult to access.

There is often the need to secure various objects to exterior surfaces of buildings which are high above the ground or are otherwise not readily accessible. Downspouts, wires and signs are just a few examples. The mounting of such items on the exterior of the building normally entails the use of ladders, scaffolding, or other more elaborate support systems depending on the height and type of building involved. The use of such devices is expensive, time-consuming and dangerous.

Accordingly, in a first aspect, the invention consists in a device adapted for securing an item in an opening through a wall of a building having a relatively accessible interior surface and an opposite relatively inaccessible exterior surface, the device comprising:
(a) an elongate sleeve having an outer peripheral boundary and an axial passage extending entirely through the sleeve to define opposite first and second open ends, and arranged to allow the item to be received through the second open end, and be secured in the axial passage;
(b) a resilient, radially constrictible flange provided at the first open end of the sleeve, the flange having a radially expanded condition in which the flange radially extends beyond the outer peripheral boundary of the sleeve in which condition the flange is arranged to engage said inaccessible exterior surface of said wall;
(c) a reduced outer diameter portion of the sleeve for accommodating the flange within the outer peripheral boundary of the sleeve, the flange having a radially constricted condition in which the flange is entirely within the outer peripheral boundary of the sleeve; and,
(d) engagement means provided about the second open end of the sleeve, which secure said sleeve to said wall by adjustably drawing the sleeve through said wall such that said flange is drawn towards said inaccessible exterior surface, without preventing the item from being received in the axial passage.

In a further aspect, the invention consists in a method for mounting an item at a remote surface of a wall defining the remote surface and an opposite, adjacent surface comprising:
(a) boring a through opening in the wall from the adjacent surface through the remote surface;
(b) inserting from the adjacent surface of the wall to a point beyond the remote surface of the wall a sleeve having a leading end, a trailing end, an axial passage extending entirely through the sleeve, and a resilient, radially constrictible flange having an expanded condition in which the flange extends radially beyond the periphery of the through opening, the inserting step comprising radially constricting the flange for passage through the through opening, and inserting the sleeve sufficiently so that the flange is positioned beyond the remote surface of the wall to allow the flange to expand to its relaxed condition;
(c) securing the sleeve to said wall by attaching engagement means about said trailing end, said engagement means adjustably drawing the sleeve through said wall such that said flange is drawn towards said remote surface, without preventing the item from being received in the axial passage; and
(d) securing the item in the sleeve.

In a still further aspect the invention consists in a method of mounting a nozzle at a remote surface of a wall defining the remote surface and an opposite adjacent surface for conveying condensate from an air conditioning system, comprising the steps of:
(a) boring a through opening in the wall from the adjacent surface through the remote surface;
(b) inserting from the adjacent surface of the wall to a point beyond the remote surface of the wall a sleeve having a leading end, a trailing end, an axial passage extending entirely through the sleeve, and a resilient, radially constrictible flange having an expanded condition in which the flange extends radially beyond the periphery of the through opening, said inserting step comprising radially constricting the flange for passage through the through opening, and inserting the sleeve sufficiently so that said flange is positioned beyond the remote surface of the wall to allow the flange to expand to its relaxed condition;
(c) securing the sleeve in the through opening at said trailing end and said adjacent surface;
(d) securing the nozzle in the sleeve;
(e) connecting the nozzle at said remote surface to said air conditioning system; and
(f) conveying condensate from said air conditioning system through said nozzle.

The present invention allows the installation and securing of an item on a wall entirely from one side of the wall. This is advantageous in the situation where one side of the wall is not very accessible, e.g. when it is the outside wall of a building many storeys above ground level. It also allows installation by just one person.

Preferably, the sleeve is of, for example, metal or hard plastic material, which can be of various lengths depending on the thickness of the wall involved.

According to the invention, attached to the one end of the sleeve is an umbrella-like flange of a resilient flexible membrane which can be radially constricted and folded upon itself in order to assume a collapsed position around the outer circumference of the sleeve. The flange in this folded position fits within a reduced outer diameter portion within a larger outer circumference defined, at least generally, by another portion of the sleeve. This allows for ease in inserting the sleeve in a pre-drilled bore in a wall. Upon being pushed through the wall and when extending out of the wall, the resiliency of the flange material causes the flange to open up to a circumference which is greater than the outer circumference of the sleeve.

In order to aid the resiliency of the flange in biasing the flange into an open position, a biasing mechanism similar to that used in a toggle bolt can be employed. A spring in the biasing mechanism biases the membrane outward and thereby assists the inherent resilient bias of the membrane of the flange in moving the flange to an open position.

Attached to the underside of the flange, in one embodiment of the present invention, is an elastomeric material which seals the open flange against the exterior surface of the wall in order to prevent the ingress of moisture, dirt and other elements into the bore in the wall. This material is attached to an inner surface of the flange by, for example, an adhesive. In another preferred embodiment, the material at the larger end of the flange can be thickened to help provide a seal between the flange and the exterior surface of the wall. A nut with a washer is screwed onto a threaded trailing end of the sleeve to secure the sleeve in the bore and to draw the flange back against the wall to form a hermetic seal against the exterior of the wall. The above mentioned biasing mechanism helps keep the flange from collapsing or inverting when the flange is drawn back.

An item especially well suited to be mounted at the exterior of the wall by using the sleeve according to the present invention is a nozzle. Such nozzles can be employed in connection with the present inventor's system for disposing of condensate from air conditioners, as disclosed in U.S. Patent No. 4,748,821.

### Brief Descriptions of the Drawings

Fig. 1 is a cross-section of a first embodiment of the through-wall sleeve assembly according to the present invention in position in an opening through a wall, including a nozzle mounted in a sleeve;
Fig. 2 is a left-end view of the sleeve assembly of Fig. 1;
Fig. 3 is a right-end view of the sleeve assembly of Fig. 1;
Fig. 4 is a fragmentary side view of the sleeve assembly of Fig. 1 with the flange in a constricted condition inside an opening through the wall;
Fig. 5 is a fragmentary cross-section of a second embodiment of the through-wall sleeve assembly according to the present invention;
Fig. 6 is a side view of a hook member for use with the through-wall sleeve assembly according to the present invention;
Fig. 7 is a side view of an eye member for use with the through-wall sleeve assembly according to the present invention;
Fig. 8 is a cross-section of a third embodiment of the through-wall sleeve assembly according to the present invention in position in an opening through a wall, with a nozzle mounted in the sleeve assembly;
Fig. 9 is a right end view of the through-wall sleeve assembly of Fig. 8;
Fig. 10 is a cross-section of the sleeve in the through-wall sleeve assembly of Fig. 8;
Fig. 11 is a right end view of the sleeve of Fig. 10;
Fig. 12 is an enlarged cross-section of the nozzle tube nut of the through-wall sleeve of Fig. 8;
Fig. 13 is a left end view of the nozzle tube nut of Fig. 12;
Fig. 14 is an enlarged cross-section of the sleeve nut of Fig. 8;
Fig. 15 is a left end view of the sleeve nut of Fig. 14;
Fig. 16 is an enlarged cross-section of the cover of Fig. 8;
Fig. 17 is an enlarged cross-section of one of the toggle arms of the sleeve assembly of Fig. 8;
Fig. 18 is a top plan view of the toggle arm of Fig. 17;
Fig. 19 is an enlarged side view of the toggle arm coil spring of Fig. 8;
Fig. 20 is an enlarged left end view of the toggle support of the sleeve assembly of Fig. 8;
Fig. 21 is an enlarged cross-section of the toggle arm support of Fig. 8;
Fig. 22 is an enlarged cross-section of the flange protector on the toggle arm support of Fig. 21;
Fig. 23 is a fragmentary enlargement of one of the toggle arm support posts of Fig. 20;
Fig. 24 is a side view of the toggle arm support port of Fig. 23;
Fig. 25 is a right end view of the flange of the sleeve assembly of Fig. 8; and
Fig. 26 is a cross-section taken along the line 26-26 of the flange of Fig. 25.

### Detailed Description of the Preferred Embodiments of the Invention

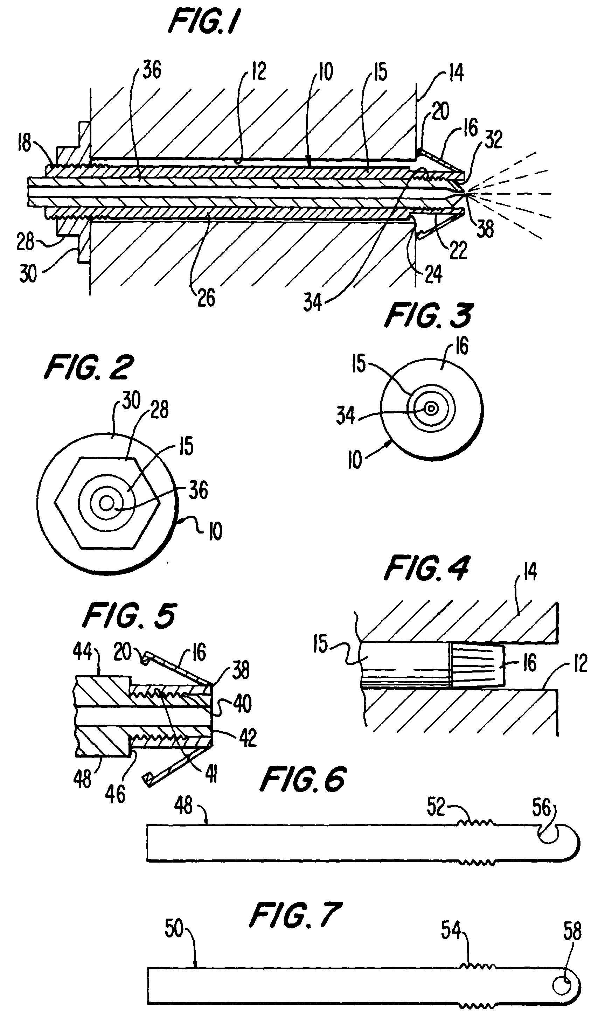

As shown in Fig. 1, the through-wall sleeve assembly according to the present invention, which is designated generally by the reference numeral 10, is in position in a bore 12 through a wall 14. In Fig. 1, the sleeve assembly 10 is inserted from the left side of the wall 14, which ordinarily is readily accessible, to protrude through the right side of the wall, which is normally not readily accessible. For example, the left side of the wall 14 may be accessible from an upper floor of a building, while the right side of the wall is on the exterior of the building, high above any supporting surface.

The sleeve assembly 10 includes a sleeve 15 which has a resilient flange 16 at its leading end, determined by the direction of insertion of the sleeve assembly 10 into the bore 12, and external screw threads 18 at its trailing end. The flange 16 is in the form of a frustoconical membrane of resilient material attached at its smallest diameter to the leading end of the sleeve 15 and flaring outwardly and rearwardly therefrom. An annular sealing member 20 of compressible resilient material is attached at the trailing end of the flange, along the inner periphery thereof, by adhesive or the like. A portion 22 of the sleeve 15 at the leading end has a reduced outer diameter, thereby defining a shoulder 24 with a full outer diameter portion 26 of the sleeve 15. The axial length of the reduced outer diameter portion 22 is at least as great as the length of the generatrix of the frustoconical flange 16, that is, the dimension extending along the flange from its circle of greatest diameter to its circle of least diameter. A nut 28 having a washer 30, which may be integral with the nut 28, is threaded onto the trailing end of the sleeve 15 to engage the interior surface of the wall 14.

The sleeve 15 has interior threads 32 adjacent to the leading end for mating with external threads 34 on a nozzle 36. The nozzle 36 has a generally cylindrical configuration in which the outer diameter of the cylinder closely approximates the inner diameter of the sleeve 15. The exterior threads 34 on the nozzle 36 are adjacent to a nozzle opening 38 and have a diameter small enough so that the nozzle 36 can be slid through the interior of the sleeve assembly 10 until the external threads 34 of the nozzle 36 engage the interior threads 32 on the sleeve 15. Then, only a minimal amount of rotation of the nozzle 36 relative to the sleeve 15 is required to secure the nozzle in position. A trailing end of the nozzle 36 is connected by a connection of a known type to a fluid line for conveying a fluid to the nozzle. It is contemplated that the through-wall sleeve assembly 10 according to the present invention, when used in connection with a nozzle 36, is particularly useful for conveying condensate from an air conditioning system to the nozzle. In this way, the condensate can be sprayed outwardly from the exterior of a building in the manner generally disclosed in the inventor's U.S. Patent No. 4,748,821.

In use, the bore 12 is cylindrical, formed through the wall 14 by a drill of appropriate size. The leading end of the sleeve 15 is inserted into the bore 12 so that the material of the wall 14 surrounding the bore constricts the resilient flexible membrane of the flange 16 against the reduced diameter portion 22 of the sleeve 15, thereby forming folds in the flange 16 similar to those of a folded umbrella, as can be seen from Fig. 4. When the unattached, trailing edge of the flange 16 passes out of the bore 12, beyond the exterior surface of the wall 14, the resiliency of the flange 16 forces the flange radially outward to assume its frustoconical shape. At this point, the exterior threads 18 of the trailing end of the sleeve 15 are exposed on the interior side of the wall 14. The nut 28 and washer 30 is screwed onto the threads 18 of the sleeve 15 until the washer 30 engages the interior surface of the wall 14. The nut 28 and washer 30 is rotated further to draw the sleeve 15 axially inward and to compress the annular sealing member 20 against the exterior surface of the wall, thereby forming a weather-tight seal. In this state, the frustoconical surface of the flange 16 is bowed slightly inward. The nozzle 36 is slid through the sleeve 15 until the external threads 34 of the nozzle 36 contact the internal threads 32 at the leading end of the sleeve 15, and the nozzle 36 is rotated until it is in firm threaded engagement with the sleeve. The fluid connection at the trailing end of the nozzle 36 at the interior side of the wall is made so that the nozzle is ready for use.

It is contemplated that the resilient flange 16 can be provided separate from the rest of the sleeve, as can be seen from the embodiment illustrated in Fig. 5. In this embodiment, the frustoconical membrane 16 is attached to a cylindrical member 38 having female threads 40 which mate with male threads 41 on a reduced diameter portion 42 at the leading end of a sleeve 44, the reduced diameter portion 42 defining a shoulder 46 with a full diameter portion 48 of the sleeve 44. The reduced diameter portion 42 has a diameter small enough that both the cylindrical member 38 and the membrane of the flange 16, when the flange is in a constricted position around the cylindrical portion, are within the outer circumference of the full diameter portion 26. Flanges of the type according to the embodiment illustrated in Figure 5 can be sent to an installation site separate from the sleeves and can be attached at the time of sleeve installation.

The through-wall sleeve assembly 10 according to the present invention is not limited to use in connection with nozzles. Other elements can be inserted into the sleeve 15 to provide a convenient mechanism for mounting said elements on an exterior side of a wall to which access is difficult or impossible. Accordingly, Figs. 6 and 7 show, respectively, a hook member 48 and an eye member 50, either of which can be inserted into the sleeve 15 according to the present invention and secured in position projecting beyond the exterior surface of the wall 14 and, in this case, beyond the leading end of the sleeve 15. External threads 52 and 54 on the hook member 48 and the eye member 50, respectively, have a diameter such that they can be slid through the sleeve 15 until they engage the internal threads 32 at the leading end of the sleeve 15, whereupon they can be rotated for final threaded engagement with the sleeve. The axial distances between the threads 52 and a hook 56 on the hook member 48 and between the threads 54 and an eye 58 on the eye member 50 are chosen so that the hook 56 and the eye 58 extend beyond the leading end of the sleeve 15, where objects of various descriptions can be attached thereto.

Attached to the underside of the flange is an elastomeric material 20 which seals the open flange against the exterior surface of the wall in order to prevent the ingress of moisture, dirt and other elements into the bore in the wall. This material is attached to an inner surface of the flange by, for example, an adhesive. A nut with a washer is screwed onto a threaded trailing end of the sleeve to secure the sleeve in the bore and to draw the flange, and the resilient sealing element thereon, back against the wall to form a hermetic seal against the exterior of the wall.

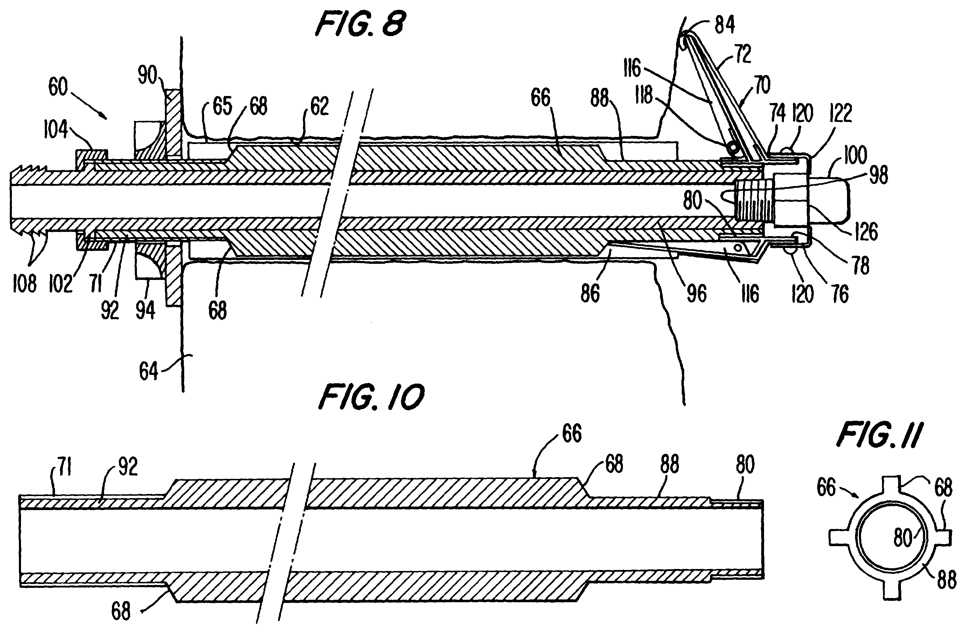

As shown in Fig. 8, a third embodiment of the through-wall sleeve assembly according to the present invention, which is designated generally by the reference numeral 60, is in position in a bore 62 through a wall 64, which can be, for example, a masonry wall. An outer tube 65 is sized so that its outer diameter is slightly smaller than the diameter of the bore 62. The insertion of the outer tube 65, which can be a thin plastic tube, into the bore 62 before other elements of the sleeve assembly 60 are inserted insures that the bore 62 is large enough to receive the sleeve assembly 60. The outer tube 65 has a smooth internal surface and protects other elements of the sleeve assembly 60 from abrasion due to sliding contact with the material defining the bore 62, which can be masonry. The sleeve assembly 60 includes a sleeve 66 which has a plurality of radially-extending fins or ribs 68 which generally define an outer diameter just slightly smaller than the inner diameter of the outer tube 65.

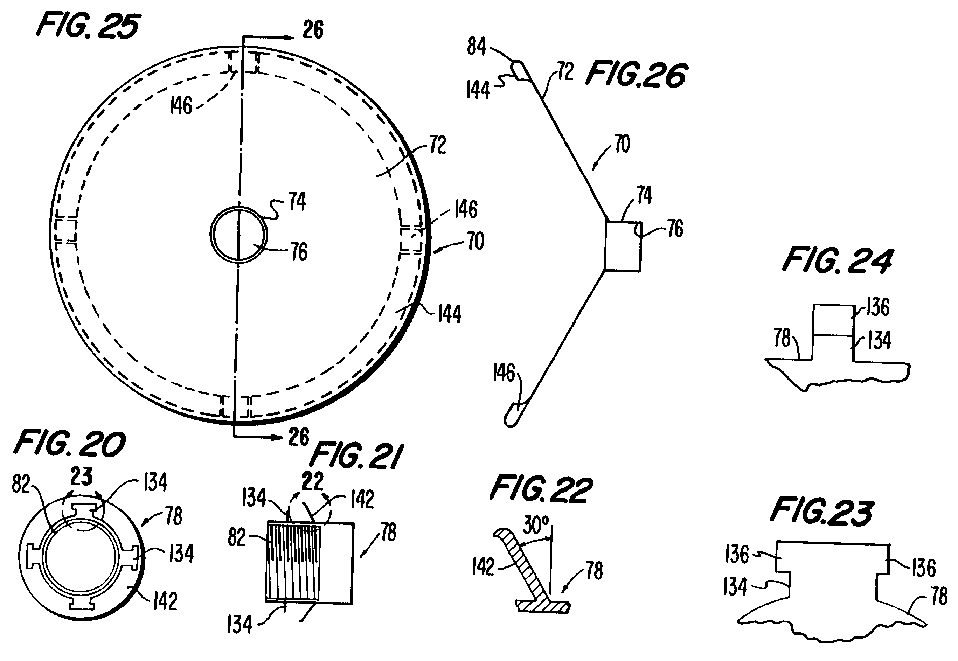

The sleeve 66 has a resilient flange 70 at its leading end, determined by the direction of the insertion of the sleeve 66 into the bore 62, and external screw threads 71 at a trailing end. The flange 70 is a thin membrane of resilient material, such as neoprene, having an expanded position in which it defines a frustoconical portion 72. At the smaller end of the frustoconical portion 72, the flange 70 includes a cylindrical portion 74 defining an axial opening 76 (Figs. 25 and 26). The flange 70 is attached to a support member 78 by stretching the cylindrical portion 74 so that it can fit over the support member 78, which is basically cylindrical. Due to the elastic nature of the material of the flange 70, the cylindrical portion 74 is held tightly on the support member 78. The support member 78 is secured to the leading end of the sleeve 66 by threads 80 on the sleeve and threads 82 (Fig. 21) on the support member 78.

The flange 70 flares outwardly and rearwardly from the cylindrical portion 74 to a trailing edge 84 which defines the largest diameter of the flange 70. The membrane which defines the flange 70 is preferably thickened at the trailing edge 84 to enhance the sealing of the trailing edge against the outer surface of the wall 64. The sleeve 66 projects, at the ends of the sleeve, axially beyond the fins 68. Thus, an annular space 86 is defined within the diameter generally defined with the radially outer surfaces of the fins 68. This space 86 accommodates the frustoconical portion 72 of the flange 70 when it is in a collapsed position against a projecting portion 88 of the sleeve 66. The axial length of the axially projecting portion 88 of the sleeve 66 at its leading end is at least as great as the combined length of the generatrix of the frustoconical portion 72 of the flange 70 and the length of the cylindrical portion 74.

A washer 90 is placed over an axially projecting portion 92 of the sleeve 66 at its trailing end, so that the washer engages the interior surface of the wall 64. A nut 94 threadedly engages screw threads 71 on the exterior surface of the rearward axially projecting portion 92 of the sleeve 66, whereby tightening the nut 94 pushes the washer 90 against the interior surface of the wall and draws the sleeve 66 toward the interior.

A nozzle tube 96 has an outer diameter just slightly smaller than the inner diameter of the sleeve 66 so that the nozzle tube 96 defines a sliding fit inside the sleeve. A leading end of the nozzle tube 96 has internal threads for mating with external threads 98 on a nozzle 100. Spaced slightly forward of the trailing end of the nozzle tube 96 is a stop flange 102 projecting radially from the outer surface of the nozzle tube to abut the trailing end of the sleeve 66. The stop flange 102 is positioned on the nozzle tube 96 such that, when the stop flange abuts the trailing end of the sleeve 66, the nozzle 100 projects forwardly from the leading end of the sleeve. A nozzle tube nut 104 engages a trailing surface of the stop flange 102 and has threads 106 (Fig. 12) for engagement with the external threads 71 on the trailing end of the sleeve 66. By this arrangement, the nozzle tube nut 104 holds the nozzle tube 96 in a predetermined fixed position on the sleeve 66. At the trailing end of the nozzle tube 96, spaced slightly rearward of the stop flange 102 is a structure, such as a plurality of annular ridges 108, to connect the nozzle tube 96 to a line, such as a flexible tube, carrying condensate to be dispersed.

As can be appreciated from Figs. 10 and 11, the sleeve 66 in the embodiment illustrated has four radially-projecting ribs 68. It is contemplated that arrangements using a different number of ribs 68 are also suitable with the present invention. As can be seen from Figs. 12 and 13, the nozzle tube nut 104 has not only the internal threads 106 for engaging external threads at the trailing end of the sleeve 66 but also a flange 110 projecting radially inward in order to engage a rear surface on the stop flange 102 of the nozzle tube 96. As can be seen from Figs. 14 and 15, the sleeve nut 94 has internal threads 112 and a plurality of recesses 114 formed in the radially outer and rear surfaces of the sleeve nut to make the sleeve nut well suited for gripping and tightening by hand and without the use of tools.

A plurality of toggle arms 116 are pivotally mounted at discrete locations spaced around the circumference of the support member 78 and are connected to the flange 70 for biasing the flange from a collapsed position to an expanded position. In the lower half of Fig. 8, the toggle arm 116 is shown in a collapsed position in the space 86 defined within the outer diameter generally defined by the ribs 68 of the sleeve 66. The nozzle tube 96 and the sleeve 66 are moved forward together relative to the outer tube 65 until the trailing edge 84 of the flange and trailing ends of the toggle arms 116 move outward beyond the leading end of the outer tube 65 and the exterior surface of the wall 64. At that point, the flange 70 and the toggle arms 116 are no longer constrained. As a result, they move outward by the action of coil springs 118 connected to the toggle arms 116, as well as by the inherent resiliency of the material of the flange 70. When the expanded state of the flange 70 is reached, the sleeve 66 and the flange 70 are drawn back toward the interior by the tightening of the sleeve nut 94 at the interior surface of the wall 64. The sleeve nut 94 is tightened until the trailing edge 84 of the flange 70 firmly contacts the exterior surface of the wall 64, thereby forming a seal with the wall, as is shown in the upper half of Fig. 8. Of course, in actual practice, all of the toggle arms 116 will be in the collapsed position at the same time and in the expanded position at the same time.

As can be appreciated from Figs. 8 and 16, screws 120 secure a cover 122 over the cylindrical portion 74 of the flange 70 to the support 78 secured at the leading end of the sleeve 66. The cover 122 has a radially inwardly projecting flange 124 which engages a shoulder 126 defined on the nozzle 100.

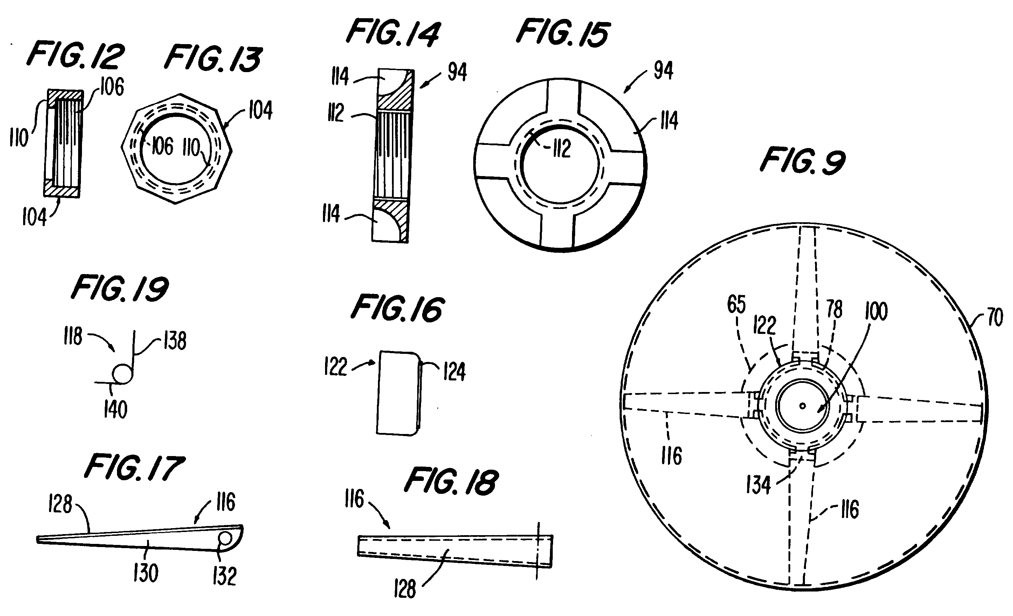

As can be appreciated from Figs. 17 and 18, each toggle arm 116 is a channel member, having a top 128 and two sides 130, the toggle arm tapering both in height and width from one end to the other. At the higher, wider end of the toggle arm 116, aligned openings 132 are formed in the sides 130. Each toggle arm 116 is mounted on the support member 78 and, more specifically, on a toggle arm mounting post 134 projecting radially from the support member, as can be seen from Figs. 20 and 21. As can be seen from Figs. 23 and 24, each mounting post 134 has oppositely projecting nubs 136. When the toggle arm 116 is positioned over the mounting post 134, the nubs 136 protrude through the aligned openings 132 in the sides 130 of the toggle arm 116 so that the toggle arm pivots on the mounting post. A coil spring 118 is positioned around at least one of the nubs 136 , between the mounting post 134 and a side 130 of the toggle arm 116 to bias the toggle arm to a position in which the toggle arm projects at an angle from the sleeve 66. As can be appreciated from Figs. 8 and 19, each coil spring 118 has a first leg 138 projecting along and contacting an undersurface of the top 128 of the toggle arm 116, and another leg 140 projecting from the coil of the spring and engaging a surface on the support 78. As can be seen from Figs. 20 and 21, a plurality of the toggle arm support posts 134 project radially in a plane transverse to the axis of the cylinder of the support member 78 in a plane adjacent to the trailing end of the support member. Spaced slightly forward of this plane is a flange protector 142, which itself is a flange flaring outwardly and rearwardly from the cylindrical portion of the support member 78. The flange protector 142 can form an angle of, for example, 30° with a plane transverse to the longitudinal axis of the support member 78. The flange protector 142 prevents the material of the flange 70 from being caught between the relatively moving surfaces of the toggle arms 116 and their supporting posts 134. The top 128 of the channel defining each toggle arm 116 projects sufficiently beyond the aligned openings 132 in a direction toward the larger end of the toggle arm 116 so that the larger end of the toggle arm engages the support 78 to prevent the coil spring 118 from biasing the toggle arm beyond an acute angle with the support member 78. This arrangement prevents the frustoconical portion 72 of the flange 70 from inverting when the flange 70 is drawn against the exterior surface of the wall 64 by the sleeve nut 94.

As can be appreciated from Figs. 24 and 26, the trailing edge 84 of the flange 70 is folded over toward the interior surface of the cone to form a hem 144. Thus, a thickened portion is formed in the frustoconical portion 72 of the flange 70 at the trailing edge 84. Furthermore, pockets 146 are formed in the hem 144 to accommodate trailing ends of the toggle arms 116, by which the flange 70 and the toggle arms move together.

It is preferred that the nozzle 100 be made of brass, that the flange 70 be made of neoprene, and that the support member 78, the toggle arms 116, the coil springs 118 and the screws 122 be made of cadmium-plated steel. The other parts of the sleeve assembly according to the present invention are preferably made of plastic.

It will be apparent that various changes and modifications can be made to the embodiments of the invention disclosed herein without departing from the spirit and scope of the invention, which are defined by the appended claims.

## Claims

1. A device adapted for securing an item (36) in an opening through a wall of a building having a relatively accessible interior surface and an opposite relatively inaccessible exterior surface, the device comprising:
(a) an elongate sleeve (15, 66) having an outer peripheral boundary and an axial passage extending entirely through the sleeve (15, 66) to define opposite first and second open ends, and arranged to allow the item (36) to be received through the second open end, and be secured in the axial passage;
(b) a resilient, radially constrictible flange (16, 70) provided at the first open end of the sleeve (15, 66), the flange (16, 70) having a radially expanded condition in which the flange (16, 70) radially extends beyond the outer peripheral boundary of the sleeve (15, 66) in which condition the flange (16, 70) is arranged to engage said inaccessible exterior surface (14) of said wall;
(c) a reduced outer diameter portion (22, 88) of the sleeve (15, 66) for accommodating the flange (16, 70) within the outer peripheral boundary of the sleeve (15, 66), the flange (16, 70) having a radially constricted condition in which the flange (16, 70) is entirely within the outer peripheral boundary of the sleeve (15, 66); and,
(d) engagement means (18, 28, 30, 60) provided about the second open end of the sleeve (15, 66), which secure said sleeve (15, 66) to said wall by adjustably drawing the sleeve (15, 66) through said wall such that said flange (16, 70) is drawn towards said inaccessible exterior surface, without preventing the item (36) from being received in the axial passage.

2. The device according to claim 1, wherein the flange (16) is made of resilient, deformable material.

3. The device according to claim 1 or claim 2, wherein the flange (16) comprises a membrane having a frustoconical shape.

4. The device according to claim 3, wherein the membrane has a first end of minimum diameter connected to the first open end of the sleeve (15) and a second end of maximum diameter spaced from the first open end of the sleeve (15).

5. The device according to any one of the preceding claims, further comprising a sealing element (20) on the flange (16).

6. The device according to any one of the preceding claims, wherein the sleeve (15, 66) has a plurality of radially projecting axial ribs (68), the outer periphery of the sleeve (15) being defined by the ribs (68).

7. The device according to any one of the preceding claims, further comprising an outer tube (65), the sleeve (66) being positioned within the outer tube (65).

8. The device according to any one of the preceding claims, wherein the sleeve (15) has external threads (40) adjacent to the first open end, and the flange (16) is secured to a member (42) having internal threads (41), the member (42) being securable to the sleeve (15) by engagement of the internal threads (41) with the external threads (40).

9. The device according to any one of the preceding claims, further comprising external threads on the second open end and a nut (28) having internal threads engageable with the external threads.

10. The device according to any one of the preceding claims, further comprising a plurality of toggle arms (70) pivotally connected to the sleeve (66) and connected to the flange, and means for biasing the toggle arms (70) from a position parallel to the sleeve (66) to a position in which the toggle arm (70) define an acute angle with the sleeve (66).

11. The device according to claim 10, further comprising means for preventing the toggle arms (70) from pivoting beyond the position in which the toggle arms (70) define said acute angle.

12. The device according to any one of the preceding claims, wherein said item (36) is a nozzle.

13. The device according to claim 12, wherein the nozzle comprises an elongate tubular member.

14. The device according to claim 12 or claim 13, wherein the nozzle is mounted on a nozzle tube having an outer diameter approximating the diameter of the axial passage through the sleeve.

15. The device according to any one of claims 1 to 11, wherein said item is a mounting means having a mounting end adapted to project beyond said relatively inaccessible exterior surface, said mounting end having an eye (58) or a hook (56) formed therein to receive an object to be mounted.

16. A method for mounting an item (36) at a remote surface of a wall defining the remote surface and an opposite, adjacent surface comprising:
(a) boring a through opening in the wall from the adjacent surface through the remote surface;
(b) inserting from the adjacent surface of the wall to a point beyond the remote surface of the wall a sleeve (15, 66) having a leading end, a trailing end, an axial passage extending entirely through the sleeve (15, 66), and a resilient, radially constrictible flange (16, 70) having an expanded condition in which the flange (16, 70) extends radially beyond the periphery of the through opening, the inserting step comprising radially constricting the flange (16, 70) for passage through the through opening, and inserting the sleeve (15, 66) sufficiently so that the flange (16, 70) is positioned beyond the remote surface of the wall to allow the flange to expand to its relaxed condition;
(c) securing the sleeve (15, 66) to said wall by attaching engagement means about said trailing end, said engagement means adjustably drawing the sleeve through said wall such that said flange is drawn towards said remote surface, without preventing the item (36) from being received in the axial passage; and
(d) securing the item in the sleeve (15, 66).

17. The method of claim 16, further comprising forming a seal (20) around the through opening at the remote surface by causing said engagement means to draw the flange (15) back against the remote surface, and holding the flange (15) in the drawn-back position.

18. The method of claim 16 or claim 17, wherein the sleeve (15) has threads adjacent to its trailing end, and the step of inserting comprises leaving some of the threads exposed at the adjacent surface of the wall, the step of securing the sleeve (15) in the through opening comprising engaging the threads with a nut (18), and the steps of forming the seal (20) and holding the flange (16) in the drawn-back position comprising screwing the nut (18) on the threads.

19. The method of claim 17, wherein said flange has a resilient compressible sealing element (20), and the step of forming a seal (20) comprises compressing the sealing element (20) against the remote surface of the wall.

20. The method of any one of claims 16 to 19, wherein the sleeve has internal threads and the item has external threads, and the step of securing the item in the sleeve comprises engaging the internal threads with the external threads.

21. A method of mounting a nozzle at a remote surface of a wall defining the remote surface and an opposite adjacent surface for conveying condensate from an air conditioning system, comprising the steps of:
(a) boring a through opening in the wall from the adjacent surface through the remote surface;
(b) inserting from the adjacent surface of the wall to a point beyond the remote surface of the wall a sleeve (15, 66) having a leading end, a trailing end, an axial passage extending entirely through the sleeve, and a resilient, radially constrictible flange (16, 70) having an expanded condition in which the flange extends radially beyond the periphery of the through opening, said inserting step comprising radially constricting the flange for passage through the through opening, and inserting the sleeve sufficiently so that said flange is positioned beyond the remote surface of the wall to allow the flange to expand to its relaxed condition;
(c) securing the sleeve in the through opening at said trailing end and said adjacent surface; by attaching engagement means about said trailing end, said engagement means adjustably drawing the sleeve through said wall such that said flange is drawn towards said remote surface, without preventing the nozzle from being received in the axial passage
(d) securing the nozzle in the sleeve;
(e) connecting the nozzle at said remote surface to said air conditioning system; and
(f) conveying condensate from said air conditioning system through said nozzle.

22. The method of claim 21, wherein the sleeve has internal threads and the nozzle has external threads, and the step of securing the nozzle in the sleeve comprises engaging the internal threads with the external threads.

## Patentansprüche

1. Gerät zum Befestigen eines Gegenstandes (36) in einer Öffnung durch eine Wand eines Gebäudes, das eine relativ zugängliche Innenfläche und eine relativ unzugängliche Außenfläche besitzt, wobei das Gerät folgendes umfaßt:
(a) eine längliche Hülse (15, 66), die eine äußere umfangsmäßige Begrenzung und einen axialen Durchlaß besitzt, der sich ganz durch die Hülse (15, 66) erstreckt und gegenüberliegende erste und zweite offene Enden ausbildet, die derart angeordnet sind, daß der Gegenstand (36) durch das zweite offene Ende empfangen und im axialen Durchlaß befestigt wird,
(b) ein nachgiebiger, radial einschnürbarer Flansch (16, 70), der am ersten offenen Ende der Hülse (15, 66) vorgesehen ist, wobei der Flansch (16, 70), der einen radial expandierten Zustand besitzt, in dem er sich radial über die äußere Umfangsbegrenzung der Hülse (15, 66) hinaus erstreckt, in welchem Zustand der Flansch (16, 70) so angeordnet ist, daß er die unzugängliche Außenfläche (14) der Wand berührt,
(c) ein Abschnitt (22, 88) der Hülse mit verringertem Außendurchmesser zum Aufnehmen des Flansches (16, 70) innerhalb der äußeren Umfangsbegrenzung der Hülse (15, 66), wobei der Flansch (16, 70), der einen radial verengten Zustand besitzt, in dem der Flansch (16, 70) gänzlich innerhalb der äußeren Umfangsbegrenzung der Hülse (15, 66) ist, und
(d) Verbindungsmittel (18, 28, 30, 60), die um das zweite offene Ende der Hülse (15, 66) vorgesehen sind, die die Hülse (15, 66) an der Wand befestigen, indem dieselbe einstellbar derart durch die Wand gezogen wird, so daß der Flansch (15, 66) in Richtung auf die unzugängliche Außenfläche gezogen wird, ohne zu verhindern, daß der Gegenstand (36) im axialen Durchlaß aufgenommen wird.

2. Gerät nach Anspruch 1, bei dem der Flansch (16) aus einem nachgiebigen, deformierbaren Material besteht.

3. Gerät nach Anspruch 1 oder 2, bei dem der Flansch (16) eine Membran umfaßt, die eine kegelstumpfartige Form besitzt.

4. Gerät nach Anspruch 3, bei dem die Membran ein erstes Ende mit minimalem Durchmesser besitzt, das mit dem ersten offenen Ende der Hülse (15) verbunden ist, sowie ein zweites Ende mit maximalem Durchmesser, das vom ersten offenen Ende der Hülse (15) beabstandet ist.

5. Gerät nach irgendeinem der vorstehenden Ansprüche, ferner umfassend ein Dichtungselement (20) am Flansch (16).

6. Gerät nach irgendeinem der vorstehenden Ansprüche, bei dem die Hülse (15, 66) eine Vielzahl radial herausragender axialer Rippen (68) besitzt, und wobei der Außenumfang der Hülse (15) durch die Rippen (68) gebildet wird.

7. Gerät nach irgendeinem der vorstehenden Ansprüche, ferner umfassend ein Außenrohr (65), wobei die Hülse (66) innerhalb des Außenrohres (65) positioniert ist.

8. Gerät nach irgendeinem der vorstehenden Ansprüche, bei dem die Hülse (15) äußere Gewinde (40) besitzt, die an das erste offene Ende angrenzen, und wobei der Flansch (16) an einem Glied (42) befestigt ist, das ein inneres Gewinde (41) besitzt, und wobei das Glied (42) an der Hülse (15) durch Eingriff des inneren Gewindes (41) mit dem äußeren Gewinde (40) befestigbar ist.

9. Gerät nach irgendeinem der vorstehenden Ansprüche, ferner umfassend ein äußeres Gewinde am zweiten offenen Ende und eine Mutter (28), die ein inneres Gewinde besitzt, die mit dem äußeren Gewinde in Eingriff bringbar ist.

10. Gerät nach irgendeinem der vorstehenden Ansprüche, ferner umfassend eine Vielzahl an Gelenkhebel- oder Spannarme (70), die schwenkbar an der Hülse (66) verbunden sind und mit dem Flansch verbunden sind, wobei Mittel, die Gelenkhebelarme (70) aus einer Position parallel zur Hülse (66) bis zu einer Position, in der der Gelenkhebelarm (70) einen spitzen Winkel mit der Hülse (66) bildet, beaufschlagen.

11. Gerät nach Anspruch 10, ferner umfassend Mittel zum Verhindern, daß die Gelenkhebelarme (70) sich über die Position hinausschwenken, in der die Gelenkhebelarme (70) den spitzen Winkel ausbilden.

12. Gerät nach irgendeinem der vorstehenden Ansprüche, bei dem der Gegenstand (36) eine Düse ist.

13. Gerät nach Anspruch 12, bei dem die Düse ein längliches rohrförmiges Glied umfaßt.

14. Gerät nach Anspruch 12 oder Anspruch 13, bei dem die Düse auf einem Düsenrohr befestigt ist, das einen Außendurchmesser besitzt, der etwa dem Durchmesser des axialen Durchlasses durch die Hülse entspricht.

15. Gerät nach irgendeinem der Ansprüche 1 bis 11, bei dem der Gegenstand ein Befestigungsmittel ist, das ein Befestigungsende besitzt, welches ausgelegt ist, um über die relativ unzugängliche Außenfläche hinauszuragen, und wobei das Befestigungsende eine Öse (58) oder einen Haken (56) besitzt, das daran ausgebildet, um einen zu befestigenden Gegenstand aufzunehmen.

16. Verfahren zum Befestigen eines Gegenstandes (36) an einer entfernten Fläche einer Wand, die die entfernte Fläche bildet und einer gegenüberliegenden, angrenzenden Fläche, umfassend:
(a) Bohren einer Durchgangsöffnung in eine Wand von einer angrenzenden Fläche durch die entfernte Fläche hindurch,
(b) Einsetzen einer Hülse (15, 66) von der angrenzenden Fläche der Wand bis zu einem Punkt über die entfernte Fläche der Wand hinaus, die ein vorderes Ende, ein hinteres Ende, einen axialen Durchlaß, der sich gänzlich durch die Hülse (15, 66) hindurcherstreckt, und einen nachgiebigen, radial einschnürbaren Flansch (16, 70) besitzt, der einen expandierten Zustand besitzt, in dem sich der Flansch (16, 70) radial über den Umfang der Durchgangsöffnung erstreckt, wobei die Stufe des Einsetzen das radiale Einschnüren des Flansches (16, 70) für den Durchgang durch die Durchgangsöffnung umfaßt, und das ausreichende Einsetzen der Hülse (15, 66), so daß der Flansch (16, 70) über die entfernte Fläche der Wand hinaus positioniert ist, damit sich der Flansch in seinen entspannten Zustand expandieren kann,
(c) Befestigen der Hülse (15, 66) an der Wand durch Befestigen des Verbindungsmittels um das hintere Ende, wobei das Verbindungsmittel die Hülse einstellbar derart durch die Wand zieht, daß der Flansch in Richtung auf die entfernte Fläche gezogen wird, ohne zu verhindern, daß der Gegenstand (36) von dem axialen Durchlaß aufgenommen wird, und
(d) Befestigen des Gegenstandes in der Hülse (15, 66).

17. Verfahren nach Anspruch 16, ferner umfassend die Ausbildung einer Dichtung (20) um die Durchgangsöffnung an einer entfernten Fläche herum, indem das Verbindungsmittel den Flansch (15) gegen die entfernte Fläche zurückzieht und den Flansch (15) in der zurückgezogenen Position hält.

18. Verfahren nach Anspruch 16 oder 17, bei dem die Hülse (15) ein Gewinde angrenzend an ihr hinteres Ende besitzt, und wobei die Stufe des Einsetzens umfaßt, daß etwas vom Gewindeverlauf an der angrenzenden Fläche der Wand freigelassen wird, und wobei die Stufe des Befestigens der Hülse (15) in der Durchgangsöffnung umfaßt, daß das Gewinde mit einer Mutter (18) in Eingriff gebracht wird, und wobei die Stufen des Ausbildens der Dichtung (20) und Haltens des Flansches (16) in der zurückgezogenen Position umfassen, daß die Mutter (18) auf das Gewinde aufgeschraubt wird.

19. Verfahren nach Anspruch 17, bei den der Flansch ein nachgiebiges, zusammendrückbares Dichtungselement (20) besitzt, und wobei die Stufe des Ausbildens einer Dichtung (20) umfaßt, daß das Dichtungselement (20) gegen die entfernte Fläche der Wand zusammengedrückt wird.

20. Verfahren nach irgendeinem der Ansprüche 16 bis 19, bei dem die Hülse innere Gewinde besitzt und der Gegenstand äußere Gewinde besitzt, und wobei die Stufe des Befestigens des Gegenstands in der Hülse umfaßt, daß das innere Gewinde mit dem äußeren Gewinde in Eingriff gebracht wird.

21. Verfahren zur Befestigung einer Düse an einer entfernten Fläche einer Wand unter Ausbildung der entfernten Fläche und einer gegenüberliegenden angrenzenden Fläche um ein Kondensat einer Klimaanlage zu fördern, umfassend folgende Stufen:
(a) Bohren einer Durchgangsöffnung in die Wand von einer angrenzenden Fläche durch die entfernte Fläche hindurch,
(b) Einsetzen einer Hülse (15, 66) von einer angrenzenden Fläche der Wand bis zu einem Punkt jenseits der entfernten Fläche der Wand, wobei die Hülse ein vorderes Ende, ein hinteres Ende, einen axialen Durchlaß, der sich ganz durch die Hülse erstreckt, und einen nachgiebigen, radial einengbaren Flansch (16, 70) besitzt, der einen expandierten Zustand besitzt, in dem sich der Flansch radial über den Umfang der Durchgangsöffnung hinaus erstreckt, und wobei die Stufe des Einsetzens umfaßt, daß der Flansch zum Durchgang durch die Durchgangsöffnung radial eingeengt wird, und wobei die Hülse ausreichend eingesetzt wird, so daß der Flansch über die entfernte Fläche der Wand hinaus positioniert ist, damit der Flansch sich in seinen entspannten Zustand expandieren kann,
(c) Befestigen der Hülse in der Durchgangsöffnung am hinteren Ende und an der angrenzenden Fläche, indem das Verbindungsmittel um das hintere Ende herum befestigt wird, wobei das Verbindungsmittel die Hülse einstellbar derart durch die Wand zieht, daß der Flansch in Richtung auf die entfernte Fläche zu gezogen wird, ohne zu verhindern, daß die Düse im axialen Durchgang aufgenommen wird,
(d) Befestigen der Düse in der Hülse,
(e) Verbinden der Düse an der entfernten Fläche mit der Klimaanlage, und
(f) Überführen des Kondensats aus der Klimaanlage durch die Düse.

22. Verfahren nach Anspruch 21, bei dem die Hülse ein Innengewinde und die Düse ein Außengewinde besitzt, und wobei die Stufe des Befestigens der Düse in der Hülse umfaßt, daß das Innengewinde mit dem Außengewinde in Eingriff gebracht wird.

## Revendications

1. Dispositif adapté pour fixer un objet (36) dans une ouverture à travers une paroi d'un bâtiment possédant une surface intérieure relativement accessible et une surface extérieure opposée relativement inaccessible, le dispositif comprenant :
(a) un fourreau allongé (15, 66) ayant une limite périphérique extérieure et un passage axial s'étendant entièrement à travers le fourreau (15, 66) pour définir une première et une deuxième extrémité ouvertes opposées, et agencé de manière à permettre à l'objet (36) d'être reçu à travers la deuxième extrémité ouverte, et d'être fixé dans le passage axial ;
(b) une bride élastique (16, 70), susceptible d'être contractée radialement, prévue à la première extrémité ouverte du fourreau (15, 66), la bride (16, 70) ayant une condition expansée radialement dans laquelle la bride (16, 70) s'étend radialement au-delà de la limite périphérique extérieure du fourreau (15, 66), condition à laquelle la bride (16, 70) est agencée de manière à engager ladite surface extérieure inaccessible (14) de ladite paroi ;
(c) une partie à diamètre extérieur réduit (22, 88) du fourreau (15, 66) pour loger la bride (15, 70) à l'intérieur de la limite périphérique extérieure du fourreau (15, 66), la bride (16, 70) ayant une condition radialement contrainte dans laquelle la bride (16, 70) est entièrement à l'intérieur de la limite périphérique extérieure du fourreau (15, 66), ce qui fixe ledit fourreau (15, 66) sur ladite paroi en tirant de façon ajustable le fourreau (15, 66) à travers ladite paroi de telle façon que ladite bride (16, 70) est tirée vers ladite surface extérieure inaccessible, sans empêcher à l'objet (36) d'être reçu dans le passage axial.

2. Dispositif selon la revendication 1, dans lequel la bride (16) est réalisée en matériau élastique déformable.

3. Dispositif selon l'une ou l'autre des revendications 1 et 2, dans lequel la bride 16 comprend une membrane ayant une forme tronconique.

4. Dispositif selon la revendication 3, dans lequel la membrane a une première extrémité de diamètre minimum, connectée à la première extrémité ouverte du fourreau (15), et une deuxième extrémité de diamètre maximum espacée de la première extrémité ouverte du fourreau (15).

5. Dispositif selon l'une quelconque des revendications précédentes, comprenant en outre un élément d'étanchement (20) sur la bride (16).

6. Dispositif selon l'une quelconque des revendications précédentes, dans lequel le fourreau (15, 66) possède une pluralité de nervures axiales (68) en projection radiale, la périphérie extérieure du fourreau (15) étant définie par les nervures (68).

7. Dispositif selon l'une quelconque des revendications précédentes, comprenant en outre un tube extérieur (65), le fourreau (66) étant positionné à l'intérieur du tube extérieur (65).

8. Dispositif selon l'une quelconque des revendications précédentes, dans lequel le fourreau (15) présente des filetages externes (40) adjacents à la première extrémité ouverte, et la bride (16) est fixée à un élément (42) possédant des taraudages internes (41), l'élément (42) étant susceptible d'être fixé sur le fourreau (15) par engagement des filetages internes (41) avec les taraudages externes (40).

9. Dispositif selon l'une quelconque des revendications précédentes, comprenant en outre des filetages sur la deuxième extrémité ouverte, et une gorge (28) ayant des taraudages internes susceptible d'être engagés avec les filetages.

10. Dispositif selon l'une quelconque des revendications précédentes, comprenant en outre une pluralité de bras à genouillère, connectés en pivotement au fourreau (66) et connectés à la bride, et des moyens pour repousser les bras de genouillère (70) depuis une position parallèle au fourreau (66) jusqu'à une position dans laquelle le bras à genouillère (110) définit un angle aigu avec le manchon (66).

11. Dispositif selon la revendication 10, comprenant en outre des moyens pour empêcher au bras à genoux hier (70) de pivoter au-delà de la position dans laquelle les bras à genouillère (70) définissent ledit angle aigu.

12. Dispositif selon l'une quelconque des revendications précédentes, dans lequel ledit objet (36) est une buse.

13. Dispositif selon la revendication 12, dans lequel la buse comprend un élément tubulaire allongé.

14. Dispositif selon l'une ou l'autre des revendications 12 et 13, dans lequel la buse est montée sur un tube de buse ayant un diamètre extérieur approximativement égal au diamètre du passage axial à travers le fourreau.

15. Dispositif selon l'une quelconque des revendications 1 à 11, dans lequel ledit objet est un organe de montage ayant une extrémité de montage adaptée à se projeter au-delà de ladite surface extérieure relativement inaccessible, ladite extrémité de montage ayant un oeillet (58), ou bien un crochet (56) formé dans celle-ci pour recevoir un objet à monter.

16. Procédé pour monter un objet (34) sur une surface éloignée d'une paroi définissant la surface éloignée et une surface adjacente opposée, comprenant les opérations suivantes :
(a) percer une ouverture traversante dans la paroi depuis la surface adjacente jusqu'à la surface éloignée ;
(b) introduire depuis la surface adjacente de la paroi jusqu'à un point au-delà de la surface éloignée de la paroi, un fourreau (15, 66) ayant une extrémité de tête, une extrémité de queue, un passage axial s'étendant entièrement à travers le fourreau (15, 66), et une bride élastique, susceptible de se contracter radialement (16, 70) ayant une condition expansée dans laquelle la bride (16, 70) s'étend radialement au-delà de la périphérie de l'ouverture traversante, l'opération d'introduction comprenant le fait de contraindre radialement la bride (16, 70) pour son passage à travers l'ouverture traversante, et d'introduire le fourreau (soit 15, 66) suffisamment pour que la bride (16, 70) soit positionnée au-delà de la surface éloignée de la paroi pour permettre à la bride de se dilater jusqu'à sa condition relâchée ;
(c) fixer le fourreau (15, 66) sur ladite paroi par des moyens d'engagement et de fixation autour de ladite extrémité de queue, lesdits moyens d'engagement tirant de façon ajustable le fourreau à travers ladite paroi, de sorte que ladite bride est tirée vers ladite surface éloignée, sans empêcher à l'objet (36) d'être reçu dans le passage axial ; et
(d) fixer l'objet dans le fourreau (15, 66).

17. Procédé selon la revendication 16, comprenant en outre l'opération consistant à former un joint (20) autour de l'ouverture traversante au niveau de la surface éloignée en amenant lesdits moyens d'engagement à tirer la bride (15) en recul contre la surface éloignée, et en maintenant la bride (15) dans la position tirée en recul.

18. Procédé selon l'une ou l'autre des revendications 16 et 17, dans lequel le fourreau (15) comporte des filetages adjacents à son extrémité de queue, et l'opération d'introduction comprend le fait de laisser certains des filetages exposés au niveau de la surface adjacente de la paroi, l'opération consistant à fixer le fourreau (15) dans l'ouverture traversante comprend le fait d'engager les filetages avec un écrou (18), et les opérations consistant à former le joint (20) et à maintenir la bride (16) dans la position tirée en recul comprennent le fait de visser l'écrou (18) sur les filetages.

19. Procédé selon la revendication 17, dans lequel ladite bride comprend un élément d'étanchement compressible élastique (20), et l'opération de formation d'un joint (20) comprend le fait de comprimer l'élément d'étanchement (20) contre la surface éloignée de la paroi.

20. Procédé selon l'une quelconque des revendications 16 à 19, dans lequel le fourreau comprend des taraudages et l'objet comporte des filetages, et l'opération consistant à fixer l'objet dans le fourreau comprend le fait d'engager les taraudages avec les filetages.

21. Procédé pour monter une buse sur une surface éloignée d'une paroi définissant la surface éloignée et une surface opposée adjacentes, afin d'évacuer des condensats depuis un système de conditionnement d'air, comprenant les opérations consistant à :
(a) percer une ouverture traversante dans la paroi depuis la surface adjacente jusqu'à la surface éloignée ;
(b) introduire, depuis la surface adjacente de la paroi jusqu'à un point au-delà de la surface éloignée de la paroi, un fourreau (15, 66) ayant une extrémité de tête, une extrémité de queue, un passage axial s'étendant entièrement à travers le fourreau, et une bride élastique susceptible d'être contractée radialement (16, 70) ayant une condition expansée dans laquelle la bride s'étend radialement au-delà de la périphérie de l'ouverture traversante, ladite opération d'introduction comprenant le fait de contracter radialement la bride pour son passage à travers l'ouverture traversante, et d'introduire le fourreau suffisamment de telle façon que ladite bride soit positionnée au-delà de la surface éloignée de la paroi pour permettre à la bride de se dilater jusqu'à sa condition relâchée ;
(c) fixer le fourreau dans l'ouverture traversante au niveau de ladite extrémité de queue et ladite surface adjacente en attachant des moyens d'engagement autour de ladite extrémité de queue, lesdits moyens d'engagement tirant de façon ajustable le fourreau à travers ladite paroi de manière que ladite bride soit tirée vers ladite surface éloignée, sans empêcher à la buse d'être reçue dans le passage axial ;
(d) fixer la buse dans le fourreau ;
(e) connecter la buse au niveau de ladite surface éloignée avec ledit système de conditionnement d'air ; et
(f) transporter des condensats depuis ledit système de conditionnement d'air à travers ladite buse.

22. Procédé selon la revendication 21, dans lequel le fourreau comporte des taraudages et la buse comporte des filetages, et l'opération consistant à fixer la buse dans le fourreau comprend le fait d'engager les taraudages avec les filetages.
